# EUROPÄISCHE PATENTSCHRIFT

(11) **EP 2 539 783 B1**
(45) Veröffentlichungstag und Bekanntmachung des Hinweises auf die Patenterteilung: **25.06.2014**
(21) Anmeldenummer: 11711480.1
(22) Anmeldetag: 30.03.2011
(51) Int. Cl.: G05B 19/404, G05B 19/416

(54) **VERFAHREN ZUR SCHWINGUNGSGEDÄMPFTEN BEWEGUNG EINES WERKSTÜCKS**
METHOD FOR VIBRATION-DAMPED MOVEMENT OF A WORKPIECE
PROCÉDÉ POUR AMORTIR LES OSCILLATIONS DU MOUVEMENT D'UNE PIÈCE

(30) Priorität: 31.03.2010 DE 102010013527
(43) Veröffentlichungstag der Anmeldung: 02.01.2013
(73) Patentinhaber: Weiss GmbH, 74722 Buchen (Odw.) (DE)
(72) Erfinder: KITZIG, Peter, 76337 Waldbronn (DE)
(74) Vertreter: Manitz, Gerhart
(86) Internationale Anmeldenummer: PCT/EP2011/001598
(87) Internationale Veröffentlichungsnummer: WO 2011/120684

(56) Entgegenhaltungen:
- EP-A1- 0 693 333
- EP-A1- 2 008 766
- EP-A2- 1 477 870
- DE-A1-102008 019 742
- US-A1- 2002 173 873

## Beschreibung

Die vorliegende Erfindung betrifft ein Verfahren zur schwingungsgedämpften rotatorischen und/oder linearen Bewegung eines Werkstücks von einer ersten Ruheposition in eine zweite Ruheposition.

Bei vielen Produktionsprozessen müssen Werkstücke zwischen einzelnen Produktionsschritten von einer ersten Ruheposition in eine zweite Ruheposition gebracht werden. Bei diesen Ruhepositionen erfolgt beispielsweise jeweils ein Bearbeitungs- und/oder Montageprozess. In der Montage- und Automatisierungstechnik finden beispielsweise Rundschalttische eine breite Anwendung, um eine getaktete Drehbewegung eines Werkstücks zu erzeugen. Dabei ist die Präzision solcher Rundschalttische von besonderer Bedeutung, damit das Werkstück stets wohldefinierte Positionen/Orientierungen relativ zu den Montage-/Bearbeitungswerkzeugen aufweist. Die Präzision der durch den Rundschalttisch erzeugten Bewegung ergibt sich aus der Genauigkeit, mit der ein Teller des Rundschalttischs, auf dem das Werkstück angeordnet ist, die einzelnen Bearbeitungspositionen einnehmen kann, sowie aus der Präzision der Drehbewegung des Tellers zwischen den Ruhe-/ Bearbeitungspositionen. Analoges gilt für Transportvorrichtungen, die lineare Bewegungen zum translatorischen Transport eines Werkstücks zwischen zwei Ruhepositionen erzeugen.

Ein häufig auftretendes Problem bei Vorrichtungen zur rotatorischen und/oder linearen Bewegung eines Werkstücks sind unerwünschte mechanische Schwingungen, die zu unruhigen Bewegungsabläufen sowie zu Ungenauigkeiten bei der Einnahme der gewünschten Ruhepositionen führen können. Daher wird oft erheblicher Aufwand betrieben, um derartige Schwingungen durch eine geeignete mechanische Auslegung der Komponenten zu vermeiden. Eine solche Vorgehensweise ist aufwändig, kostenintensiv und führt überdies oftmals nur zu unbefriedigenden Ergebnissen.

Dokument EP 0 693 333 A1 offenbart ein Verfahren zur Schwingungsdämpfung von angetriebenen Bauteilen von Werkstücktransporteinrichtungen, in dem ein Dämpfungsregelkreis in Ergänzung zu einem Lageregelkreis vorgesehen wird, und wobei die Schwingungsdämpfung durch eine direkte Beeinflussung des Antriebes der angetriebenen Bauteile erfolgt. Zur Ermittlung der Bewegung einer Transferschienenmitte, die schwingungsförmig verlaufen kann, wird eine Zustandsgröße des angetriebenen Bauteils ermittelt, welche in den Dämpfungsregler eingegeben und als Messgröße für den Dämpfungsregler verwendet und von diesem ausgewertet wird.

Es ist eine Aufgabe der vorliegenden Erfindung, ein verbessertes Verfahren zur rotatorischen und/oder linearen Bewegung eines Werkstücks von einer ersten Ruheposition in eine zweite Ruheposition zu schaffen, das eine Dämpfung oder Unterdrückung parasitärer mechanischer Schwingungen bewirkt. Außerdem soll das Verfahren auf einfache Weise zu implementieren sein.

Diese Aufgabe wird durch ein Verfahren mit den Merkmalen des Anspruchs 1 gelöst.

Das erfindungsgemäße Verfahren umfasst zumindest eine Eingangsphase und eine beliebige Hauptphase. Während der Eingangsphase wird das Werkstück beschleunigt, wobei die Beschleunigung durch eine erste Funktion definiert ist, die zumindest drei Extrema umfasst, um eine Oszillation des Werkstücks um die erste Ruheposition zu erzeugen. Die beliebige Hauptphase schließt sich an die Eingangsphase an und umfasst die Bewegung des Werkstücks von der ersten Ruheposition in die zweite Ruheposition. Die Bewegung des Werkstücks während der Hauptphase ist durch eine Beschleunigung gemäß einer beliebigen zweiten Funktion definiert.

Mit anderen Worten umfasst das Beschleunigungsprofil, dem das Werkstück ausgesetzt ist, nicht nur das herkömmlicherweise vorgesehene Beschleunigungsprofil der beliebigen Hauptphase, sondern der eigentlichen Bewegung des Werkstücks ist eine Oszillation um die erste Ruheposition vorgeschaltet. Diese Oszillation bewirkt eine Dämpfung der mechanischen Schwingung der Komponenten der das Verfahren anwendenden Transportvorrichtung. Das Hinzufügen einer solchen Oszillation zu an sich bekannten Beschleunigungsprofilen zur Erzeugung einer Bewegung des Werkstücks ist ohne größeren Aufwand möglich, insbesondere wenn der Bewegungsablauf der Transportvorrichtung durch eine Programmierung eines entsprechenden Steuergeräts frei bestimmt werden kann. Der elegante Grundgedanke der vorliegenden Erfindung, durch kontrollierte kleinskalige und vergleichsweise kurze Oszillationen parasitäre Schwingungen eines Systems zu dämpfen, erfordert in diesen Fällen nicht einmal eine Überarbeitung der verwendeten mechanischen Komponenten.

Unter Funktionen sind beispielsweise Polynome oder Verknüpfungen von zwei oder mehreren Polynomen zu verstehen.

Zur Verbesserung der Dämpfung kann sich an die Hauptphase eine Ausgangsphase anschließen, während der das Werkstück erneut beschleunigt wird. Die Beschleunigung des Werkstücks ist in der Ausgangsphase durch eine dritte Funktion definiert, die zumindest drei Extrema umfasst, um eine Oszillation des Werkstücks um die zweite Ruheposition zu erzeugen. Das Beschleunigungsprofil umfasst bei dieser Variante des Verfahrens somit neben der der beliebigen Hauptphase vorgeschalteten Oszillation eine der beliebigen Hauptphase nachgeschaltete Oszillation.

In bestimmten Fällen kann auch lediglich die nachgeschaltete Oszillation des Werkstücks um die zweite Ruheposition vorgesehen sein. Die vorgeschaltete Oszillation um die erste Ruhelage entfällt dann.

Grundsätzlich ist es möglich, dass die erste und die dritte Funktion unterschiedlich sind. Bevorzugt sind sie allerdings invers zueinander oder weisen einen gespiegelten Verlauf auf. Eine im allgemeinen Sinne symmetrische Ausgestaltung der ersten und der dritten Funktion (z.B. Spiegelung, Punktsymmetrie,...) hat sich als besonders einfach umsetzbar erwiesen und liefert gleichzeitig gute Dämpfungsergebnisse.

Vorzugsweise weisen die erste und/oder die - falls vorgesehen - dritte Funktion zumindest ein Segment mit einem konstanten Verlauf auf, d.h. die Beschleunigung des Werkstücks bleibt in diesem Segment gleich. Das genannte Segment bildet vorzugsweise das mittlere konstante Extremum der zumindest drei Extrema.

Gemäß einer vorteilhaften Ausführungsform des Verfahrens beträgt die maximale Amplitude der durch die Oszillation während der Eingangsphase und/oder - falls vorgesehen - während der Ausgangsphase erzeugten Bewegung des Werkstücks weniger als 0,1 mm auf 100 mm Gesamtweg (etwa 0,1 %), bevorzugt weniger als 0,02 mm auf 100 mm Gesamtweg (etwa 0,02 %) der während der beliebigen Hauptphasen erzeugten Bewegung. Mit anderen Worten oszilliert das Werkstück zwar, die damit verbundenen Bewegungsamplituden sind jedoch minimal und um einige Größenordnungen kleiner als die Amplitude der eigentlichen Transportbewegung. Trotz dieser kaum merkbaren Oszillation, wird eine hinreichend große dämpfende Wirkung erzielt.

Die erste Funktion und/oder die dritte Funktion (falls vorgesehen) können derart ausgestaltet sein, dass ihre Ableitungen jeweils vier Extrema aufweisen, beispielsweise um eine vorteilhafte Anknüpfung der genannten Funktionen an die beliebige zweite Funktion zu gewährleisten. Insbesondere sind ein Übergang von der ersten Funktion zu der zweiten Funktion und ein Übergang von der zweiten Funktion zu der dritten Funktion - sofern eine Ausgangsphase vorgesehen ist - stetig. Bevorzugt sind auch ein Übergang von einer Ableitung der ersten Funktion zu einer Ableitung der zweiten Funktion und ein Übergang von der Ableitung der zweiten Funktion zu der Ableitung der dritten Funktion stetig. Dadurch wird die Verknüpfung der einzelnen Phasen vereinfacht.

Alternativ oder zusätzlich können die erste und die zweite Funktion an einem Übergang von der Eingangsphase in die Hauptphase und die zweite und die dritte Funktion an einem Übergang von der Hauptphase in die Ausgangsphase - sofern eine Ausgangsphase vorgesehen ist - jeweils einen Funktionswert von 0 aufweisen (Nulldurchgang der Funktionen).

Eine für bestimmte Anwendungen besonders geeignete Ausgestaltung des Verfahrens sieht vor, dass die erste und die zweite Funktion an einem Übergang von der Eingangsphase in die Hauptphase und/oder die zweite und die dritte Funktion an einem Übergang von der Hauptphase in die Ausgangsphase jeweils die Steigung 0 aufweisen. Somit bilden die erste und die zweite Funktion bzw. die zweite und die dritte Funktion an den genannten Übergängen lokale Extrema, was letztlich nichts anderes bedeutet, als dass bei den Übergängen zwischen den Phasen keine Beschleunigungen auftreten.

Mit anderen Worten weisen die erste Ableitung der ersten Funktion und die erste Ableitung der zweiten Funktion an einem Übergang von der Eingangsphase in die Hauptphase und/oder die erste Ableitung der zweiten Funktion und die erste Ableitung der dritten Funktion an einem Übergang von der Hauptphase in die Übergangsphase jeweils einen Wert von 0 auf, um einen sanften Übergang zwischen den einzelnen Phasen zu ermöglichen.

Die Erfindung betrifft ferner eine Transportvorrichtung mit einem für eine Aufnahme eines Werkstücks geeigneten Transportelement, das rotatorisch und/oder linear von einer ersten Ruheposition in eine zweite Ruheposition bewegbar ist. Die Transportvorrichtung umfasst eine programmierbare Steuervorrichtung, die dazu ausgebildet ist, die Bewegung des Transportelements gemäß einem Verfahren nach zumindest einer der vorstehend beschriebenen Ausführungsformen zu steuern. Das Verfahren lässt sich somit auf einfache Weise durch eine geeignete Programmierung umsetzen.

Anstelle der programmierbaren Steuervorrichtung kann die vorstehend erwähnte Transportvorrichtung eine mechanische Zwangssteuerung umfassen, die derart ausgebildet ist, dass das Transportelement gemäß einem Verfahren nach zumindest einer der vorstehend beschriebenen Ausführungsformen bewegbar ist. Vorzugsweise ist das Transportelement ein Drehteller, der in eine Antriebsnut einer Kurventrommel eingreifende Mitnehmer aufweist, um durch eine Drehbewegung der Kurventrommel eine zwangsgesteuerte Drehbewegung des Drehtellers zu erzeugen.

Weitere Ausführungsformen der vorliegenden Erfindung sind in der Beschreibung, den Zeichnungen und den Unteransprüchen angegeben.

Nachfolgend wird die Erfindung rein beispielhaft anhand vorteilhafter Ausführungsformen unter Bezugnahme auf die Zeichnungen beschrieben. Es zeigen:
- Fig. 1: ein Beschleunigungsprofil einer Bewegung gemäß einer ersten Ausführungsform des erfindungsgemäßen Verfahrens;
- Fig. 2: das Beschleunigungsprofil der Fig. 1, das von einer simulierten parasitären Schwingung überlagert ist, um die Dämpfungswirkung des erfindungsgemäßen Verfahrens zu verdeutlichen;
- Fig. 3: das sich aus dem Beschleunigungsprofil der Fig. 1 ergebende Bewegungsprofil;
- Fig. 4: das sich aus dem Beschleunigungsprofil der Fig. 1 ergebende Geschwindigkeitsprofil;
- Fig. 5: das zur Erzeugung des Beschleunigungsprofils der Fig. 1 aufzubringende Antriebsmoment;
- Fig. 6: den Verlauf der als Ruckkennwert bezeichneten ersten Ableitung des Beschleunigungsprofils der Fig. 1;
- Fig. 7: ein Beschleunigungsprofil einer Bewegung gemäß einer zweiten Ausführungsform des erfindungsgemäßen Verfahrens;
- Fig. 8: das Beschleunigungsprofil der Fig. 7, das von einer simulierten parasitären Schwingung überlagert ist, um die Dämpfungswirkung des erfindungsgemäßen Verfahrens zu verdeutlichen;

- Fig. 9: das sich aus dem Beschleunigungsprofil der Fig. 7 ergebende Bewegungsprofil;
- Fig. 10: das sich aus dem Beschleunigungsprofil der Fig. 7 ergebende Geschwindigkeitsprofil;
- Fig. 11: ein Beschleunigungsprofil einer Bewegung gemäß einer dritten Ausführungsform des erfindungsgemäßen Verfahrens;
- Fig. 12: das zur Erzeugung des Beschleunigungsprofils der Fig. 11 aufzubringende Antriebsmoment;
- Fig. 13: das Beschleunigungsprofil der Fig. 11, das von einer simulierten parasitären Schwingung überlagert ist, um die Dämpfungswirkung des erfindungsgemäßen Verfahrens zu verdeutlichen;
- Fig. 14: das Profil des Antriebsmoments der Fig. 12, das von den in der Fig. 13 gezeigten parasitären Schwingungen beeinflusst ist;
- Fig. 15 und 16: das Profil des Antriebsmoments der Fig. 14 (gestreckt) bzw. den Verlauf der ersten Ableitung des Beschleunigungsprofils der Fig. 11 (Ruckkennwert);
- Fig. 17: das sich aus dem Beschleunigungsprofil der Fig. 11 ergebende Geschwindigkeitsprofil und

- Fig. 18: das sich aus dem Beschleunigungsprofil der Fig. 11 ergebende Bewegungsprofil.

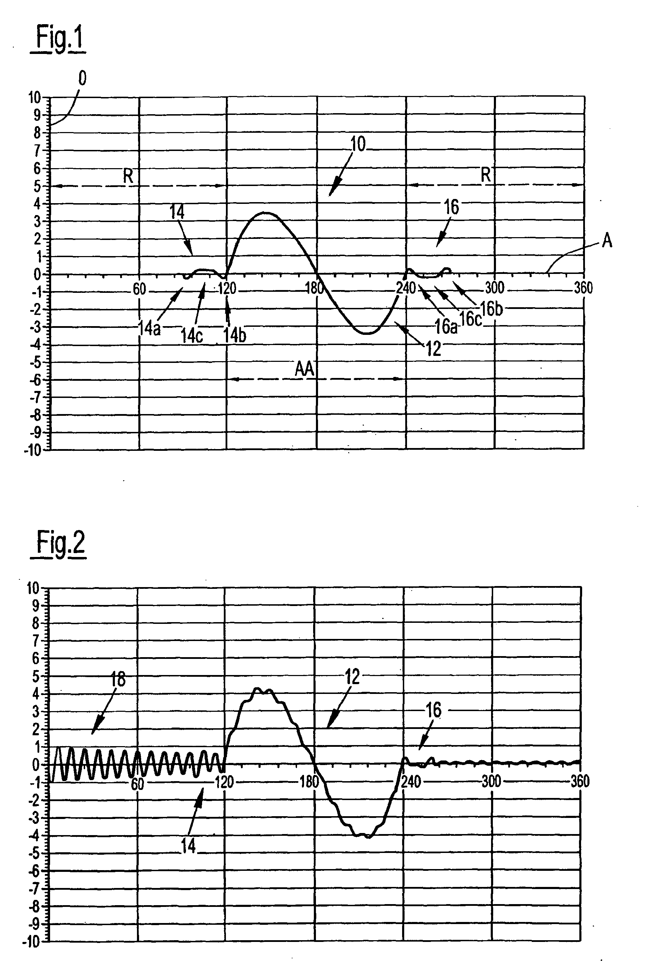

Fig. 1 zeigt ein Beschleunigungsprofil 10, das bei einem Rundschalttisch zur schwingungsgedämpften Bewegung eines Werkstücks von einer ersten Ruheposition in eine zweite Ruheposition eingesetzt wird. Die Ordinate O des dargestellten Diagramms ist mit relativen Einheiten versehen, so dass die angegebenen Zahlenwerte lediglich zur Orientierung dienen. Die Abszisse A stellt einen Drehwinkel einer Kurventrommel des Rundschalttischs dar. Die Kurventrommel weist eine Antriebsnut auf, in die Mitnehmer eines Drehtellers eingreifen, der ein zu bewegendes Werkstück aufnimmt. Um eine getaktete rotatorische Bewegung des Drehtellers zu erzeugen, ist die Kurventrommel mit Rastgängen R versehen. Die Rastgänge R définieren die Ruhepositionen des Werkstücks, d.h. zwar dreht sich die Kurventrommel auch während der Rastgänge R um einen bestimmten Drehwinkel (hier 120°), eine wesentliche Bewegung des Drehtellers wird dadurch jedoch nicht erzeugt. Zwischen den Rastgängen R weist die Antriebsnut einen beliebigen Antriebsabschnitt AA auf, der die Drehbewegung des Drehtellers erzeugt, um das Werkstück von der ersten Ruhe-/Bearbeitungsposition in die zweite Ruhe-/Bearbeitungsposition zu bewegen. In Fig. 1 sind die Drehwinkelbereiche gekennzeichnet, die von den Rastgängen R bzw. dem Antriebsabschnitt AA überdeckt werden.

In dem dargestellten Beispiel findet die eigentliche Drehbewegung des Drehtellers zwischen einem Drehwinkel von 120° und einem Drehwinkel von 240° der Kurventrommel statt. Es versteht sich, dass die durch die Drehung der Kurventrommel um 120° erzeugte beliebige Bewegung des Drehtellers nicht ebenfalls 120° umfassen muss, sondern in Abhängigkeit der Ausgestaltung der Antriebsnut auch einen größeren oder kleineren Betrag umfassen kann.

Mit anderen Worten findet bei einem Drehwinkel der Kurventrommel zwischen 0° und 120° und zwischen 240° und 360° (= 0°) im Wesentlichen keine wesentliche Bewegung des Drehtellers statt, was als Rastgang R bezeichnet wird. Aufgrund der zwischen dem Drehwinkel von 120° und dem Drehwinkel von 240° der Kurventrommel erfolgten Beschleunigung des Drehtellers wird eine rotatorische Bewegung erzeugt, die das auf dem Drehteller angeordnete Werkstück aus der ersten Ruheposition in die zweite Ruheposition befördert.

Es wird darauf hingewiesen, dass das Beschleunigungsprofil nicht zwingend eine Funktion des Drehwinkels einer Kurventrommel sein muss. Bei linearen Bewegungen kann der Beschleunigungsverlauf beispielsweise eine Funktion der Linearposition sein. Auch eine Zeitabhängigkeit ist sowohl bei rotatorischen als auch bei linearen Bewegungen vorstellbar.

Das Beschleunigungsprofil 10 umfasst eine Hauptbeschleunigung 12 mit einer positiven Beschleunigung zwischen den Abszissenwerten 120 und 180 (Beschleunigen des Drehtellers) und negativen Beschleunigungswerten zwischen den Abszissenwerten 180 und 240 (Abbremsen des Drehtellers). Der Hauptbeschleunigung 12 ist eine Eingangsoszillation 14 vorgeschaltet. Die Eingangsoszillation 14 umfasst ein erstes Minimum 14a und ein zweites Minimum 14b. Dazwischen liegt ein Maximum 14c, das abschnittsweise einen horizontalen, plateauartigen Verlauf aufweist.

Der Hauptbeschleunigung 12 ist ferner eine Ausgangsoszillation 16 nachgeschaltet. Die Ausgangsoszillation 16 entspricht einer Spiegelung der Eingangsoszillation 14 an der Abszisse A und weist folglich anstelle der Minima 14a, 14b entsprechende Maxima 16a, 16b auf. Das Maximum 14c der Eingangsoszillation 14 findet sich in der Ausgangsoszillation 16 als Minimum 16c wieder, das ebenfalls abschnittsweise einen entsprechenden horizontalen, konstanten Verlauf aufweist. Außerhalb der Eingangsoszillation 14, der Hauptbeschleunigung 12 und der Ausgangsoszillation 16 weist das Beschleunigungsprofil 10 einen Wert von 0 auf, d.h. es liegen keine Beschleunigungen vor.

Die Verläufe der Eingangsoszillation 14, der Hauptbeschleunigung 12 und der Ausgangsoszillation 16 sind derart ausgestaltet, dass an den jeweiligen Schnittstellen zum einen ein Beschleunigungswert von 0 vorliegt (Nulldurchgang). Zum anderen werden abrupte Beschleunigungsänderungen in dem Bereich der jeweiligen Schnittstellen vermieden, um ein "sanftes" Beschleunigungsprofil zu erhalten.

Fig. 2 zeigt beispielhaft in einer Simulation wie eine parasitäre Schwingung 18, die zu Beginn der Simulation "eingespeist" wird, durch das um die Oszillationen 14, 16 ergänzte Beschleunigungsprofil 10 gedämpft wird. Im Verlauf des ersten Rastgangs R nimmt die Amplitude der Schwingung 18 bis zum Abszissenwert 120 ab, was in der Simulation einerseits durch eine mechanische Dämpfung erzeugt wird. Andererseits wirkt sich aber auch ab etwa dem Abszissenwert 90 bereits die Eingangsoszillation 14 dämpfend aus, obwohl die Schwingung 18 anfangs so stark ist, dass der Verlauf der Eingangsoszillation 14 praktisch nicht zu erkennen ist. Der Verlauf der Hauptbeschleunigung 12 wird dahingegen nur noch durch unerwünschte Schwankungen relativ geringer Amplitude gestört. Da die parasitäre Schwingung 18 nach der Hauptbeschleunigung 12 nur noch relativ geringe Amplituden aufweist, ist der Verlauf der Ausgangsoszillation 16 zu erkennen. Sie trägt zu einer weiteren Dämpfung der Schwingung 18 bei, sodass in der zweiten Ruheposition bereits eine stark verringerte Amplitude der Schwingung 18 zu beobachten ist. Schaltet man mehrere Beschleunigungsprofile 10 (Takte) hintereinander, so pendelt sich die Amplitude der Schwingung 18 schnell auf ein sehr geringes Maß ein, das deutlich geringer ist als bei herkömmlichen Beschleunigungsprofilen ohne vor- bzw. nachgeschaltete Oszillationen 14 bzw. 16. In bestimmten Fällen kann es auch ausreichend sein, nur eine der Oszillationen 14, 16 vorzusehen.

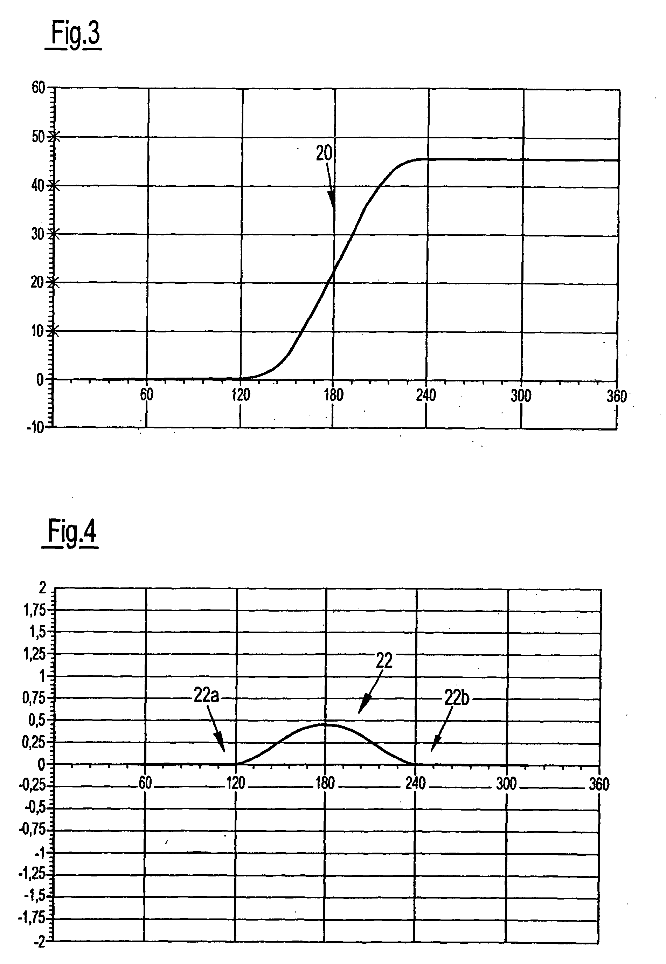

Fig. 3 zeigt ein Bewegungsprofil 20 des Drehtellers, das durch das Beschleunigungsprofil 10 erzeugt wird. Die Bewegung erfolgt dabei von dem Ordinatenwert 0 zu dem Ordinatenwert 45, was in dem dargestellten Beispiel einer Drehung um 45° entspricht. D.h. eine Drehung der Kurventrommel um 120° zwischen den Abszissenwerten 120 und 240 hat eine Drehbewegung des Drehtellers von 45° bewirkt.

Aus Fig. 3 ist ersichtlich, dass die jeweilige Amplitude der Eingangsoszillation 14 bzw. der Ausgangsoszillation 16 im Vergleich zur Amplitude der durch die Hauptbeschleunigung 12 erzeugten Bewegung vernachlässigbar ist und in dem dargestellten Maßstab nicht zu erkennen ist. Mit anderen Wort "merkt" das bewegte Werkstück praktisch nichts von den schwingungsdämpfend wirkenden Oszillationen 14, 16.

Ein durch das Beschleunigungsprofil 10 erzeugtes Geschwindigkeitsprofil 22, das in Fig. 4 gezeigt ist, lässt durch die Oszillation 14, 16 erzeugte Geschwindigkeitsoszillationen 22a, 22b erkennen. Die Geschwindigkeitsoszillationen 22a, 22b weisen allerdings im Vergleich zur Maximalamplitude des Geschwindigkeitsprofils 22 marginale Amplituden auf, sodass erkennbar ist, welch geringe Auswirkungen die Oszillationen 14, 16 auf eine tatsächliche Bewegung des Drehtellers haben, obwohl ihr Dämpfungseffekt - wie aus Fig. 2 ersichtlich - erheblich ist.

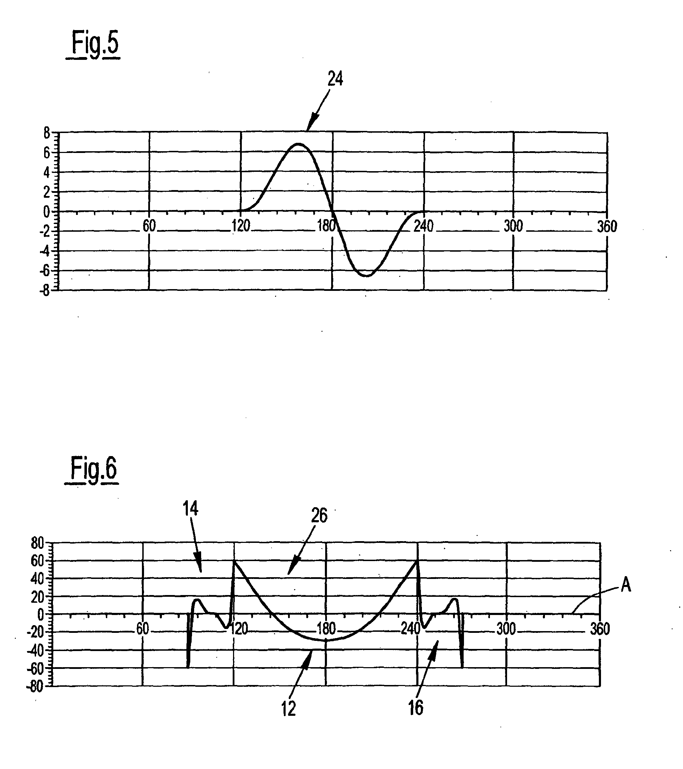

Fig. 5 zeigt das zur Erzeugung des Beschleunigungsprofils 10 erforderliche Profil 24 eines Antriebsmoments. Da die Amplituden der Oszillationen 14, 16 nur sehr gering sind, muss zu ihrer Erzeugung auch nur sehr wenig Antriebsmoment und damit Energie aufgebracht werden. Fig. 5 dokumentiert, dass das erforderliche Antriebsmoment in dem dargestellten Maßstab vernachlässigbar ist.

Fig. 6 zeigt eine Ableitung 26 (Ruckkennwert) des Beschleunigungsprofils 10 nach der in der Abszisse A aufgetragenen Parameter, um einige weitere Eigenschaften des Beschleunigungsprofils 10 deutlich zu machen. Die Ableitung 26 weist im Bereich der Eingangsoszillation 14 vier Extrema auf. Ein absolutes Minimum bzw. Maximum der ersten Ableitung der Eingangsoszillation 14 werden an deren Anfang bzw. Ende erreicht. Die Ableitung 26 der Ausgangsoszillation 16 weist einen dazu symmetrischen Verlauf auf (Spiegelung der Eingangsoszillation 14 an einer Senkrechten zu der Abszisse im Abszissenwert 180). Die Ableitung 26 der Hauptbeschleunigung 12 weist einen parabelartigen Verlauf auf, der sich zwischen den absoluten Maxima der Ableitung 26 der Eingangsoszillation 14 bzw. der Ausgangsoszillation 16 erstreckt. Der Übergang zwischen der Eingangsoszillation 14 und der Hauptbeschleunigung 12 bzw. der Hauptbeschleunigung 12 und der Ausgangsoszillation 16 wird in der ersten Ableitung somit durch jeweils eine charakteristische "Spitze" gebildet.

Es ist darauf hinzuweisen, dass als Hauptbeschleunigung 12 im Grunde eine beliebige Funktion (z.B. ein Polynom beliebigen Grades) verwendet werden kann. Die Ausgestaltung der Eingangsoszillation 14 bzw. der Ausgangsoszillation 16, die - anders als dargestellt - grundsätzlich auch vollkommen unterschiedlich ausgestaltet sein können, erlaubt die Einbindung einer Vielzahl von unterschiedlichen Hauptbeschleunigungen 12, die an das jeweils erforderliche Bewegungsprofil angepasst sind.

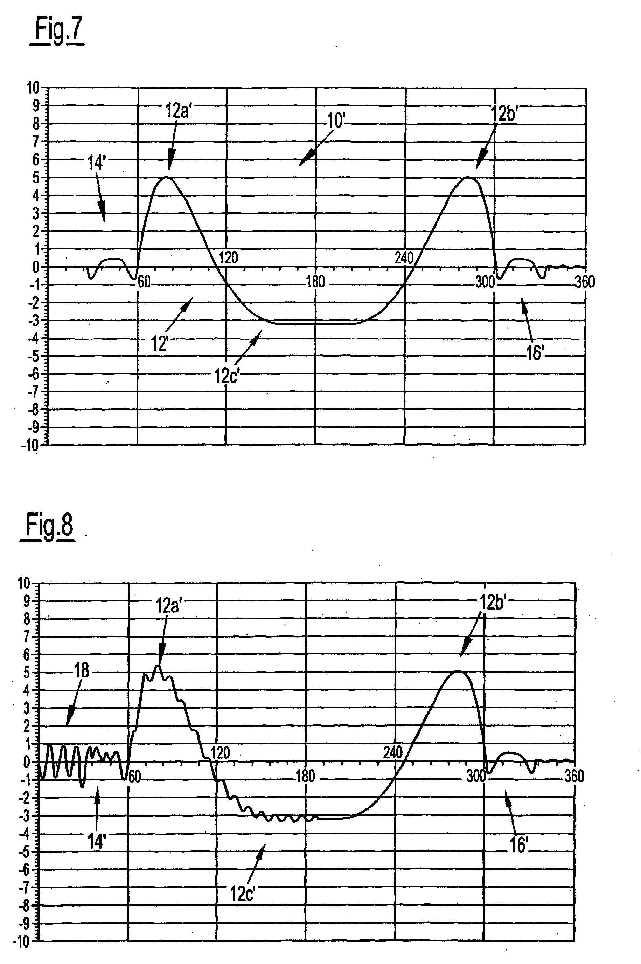

Fig. 7 zeigt ein Beschleunigungsprofil 10', das eine Eingangsoszillation 14', eine Hauptbeschleunigung 12' und eine Ausgangsoszillation 16' umfasst. Die Eingangsoszillation 14' und die Ausgangsoszillation 16' sind wiederum zueinander symmetrisch, allerdings liegt hier keine Spiegelung an der Abszisse A vor, sondern die Ausgangsoszillation 16' wird durch eine Spiegelung der Eingangsoszillation 14' an einer Senkrechten zu der Abszisse am Abszissenwert 180 erzeugt.

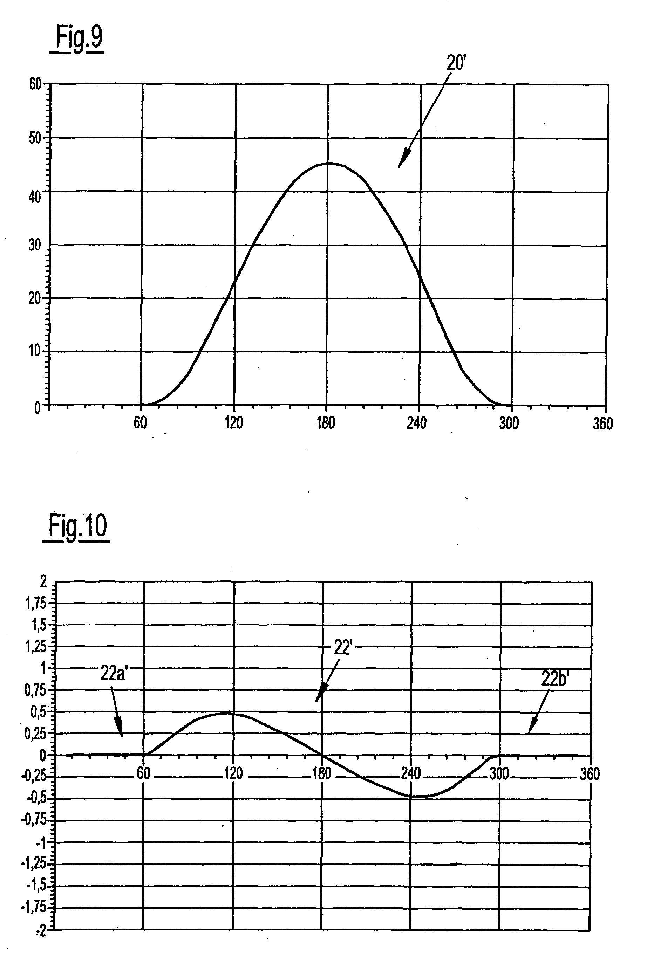

Die Hauptbeschleunigung 12' weist zwei Maxima 12a', 12b' und ein zwischen den Maxima 12a', 12b'liegendes Minimum 12c' auf, das ein waagrechtes lineares Segment umfasst. Der Verlauf der Hauptbeschleunigung 12' erzeugt eine Bewegung, die - wie in Fig. 9 zu sehen ist - ausgehend von der Ruheposition zu dieser zurück führt. Die dämpfende Wirkung der Oszillationen 14', 16' ist aus Fig. 8 ersichtlich.

Fig. 10 verdeutlicht, dass die Auswirkungen der Oszillationen 12', 14' auf ein durch das Beschleunigungsprofil 10' bedingtes Geschwindigkeitsprofil 22' minimal sind. Sie verursachen nur schwach ausgeprägte Geschwindigkeitsoszillationen 22a', 22b'.

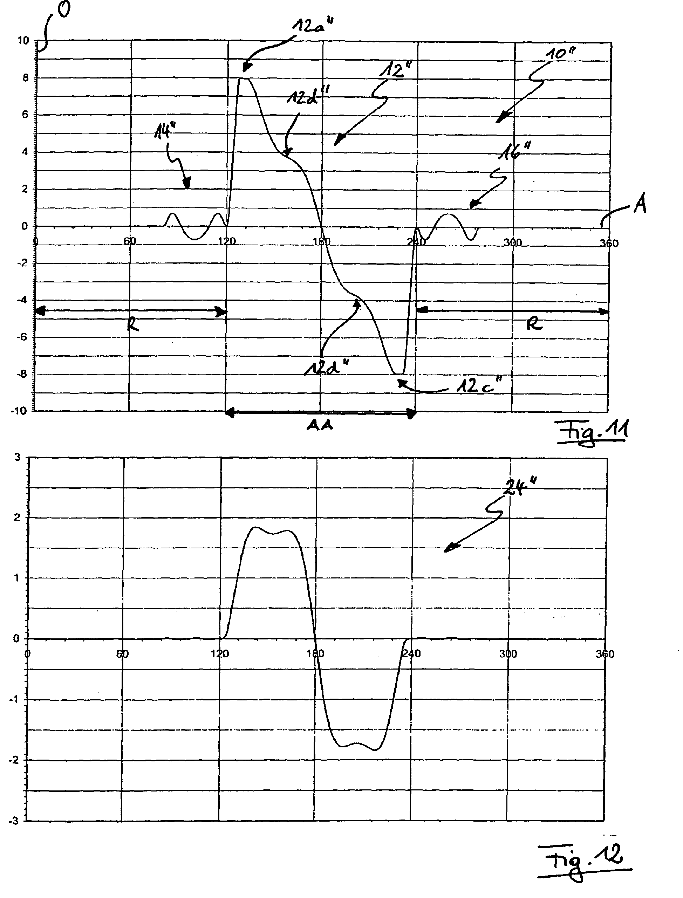

Fig. 11 zeigt ein Beschleunigungsprofil 10", das eine Eingangsoszillation 14", eine Hauptbeschleunigung 12" zwischen den Drehwinkeln 120° und 240° und eine Ausgangsoszillation 16" umfasst. Die Eingangsoszillation 14 und die Ausgangsoszillation 16 sind wiederum invers symmetrisch.

Im Gegensatz zu den vorstehend beschriebenen Beschleunigungsprofilen 10, 10' liegt bei einem Übergang von der Eingangsoszillation 14" zu der Hauptbeschleunigung 12" kein Nulldurchgang vor, sondern das Beschleunigungsprofil 10" weist an diesem Übergang ein lokales Minimum auf. Gleiches gilt für den Übergang zwischen der Hauptbeschleunigung 12" und der Ausgangsoszillation 16". Der Betrag der Beschleunigung ist in diesen Übergängen zwar ebenfalls 0, allerdings liegt kein Verlauf vor, bei dem die Beschleunigung von einem positiven zu einem negativen Wert wechselt oder umgekehrt.

Der Beginn der Hauptbeschleunigung 12" ist durch einen starken Anstieg charakterisiert. Nach Erreichen eines absoluten Maximums 12a" fällt die Beschleunigung wieder ab. Der Abfall der Beschleunigung bis zu einem Minimum 12c" umfasst zwei Wendepunkte 12d" und einen Nulldurchgang bei einem Drehwinkel von 180°.

Fig. 12 zeigt das zur Erzeugung des Beschleunigungsprofils 10" erforderliche Profil 24" eines Antriebsmoments. Wie auch bei den Beschleunigungsprofilen 10, 10' ist das zur Erzeugung der Oszillationen 14", 16" erforderliche Antriebsmoment sehr gering und führt in der Praxis zu keinem relevanten Energiemehrverbrauch.

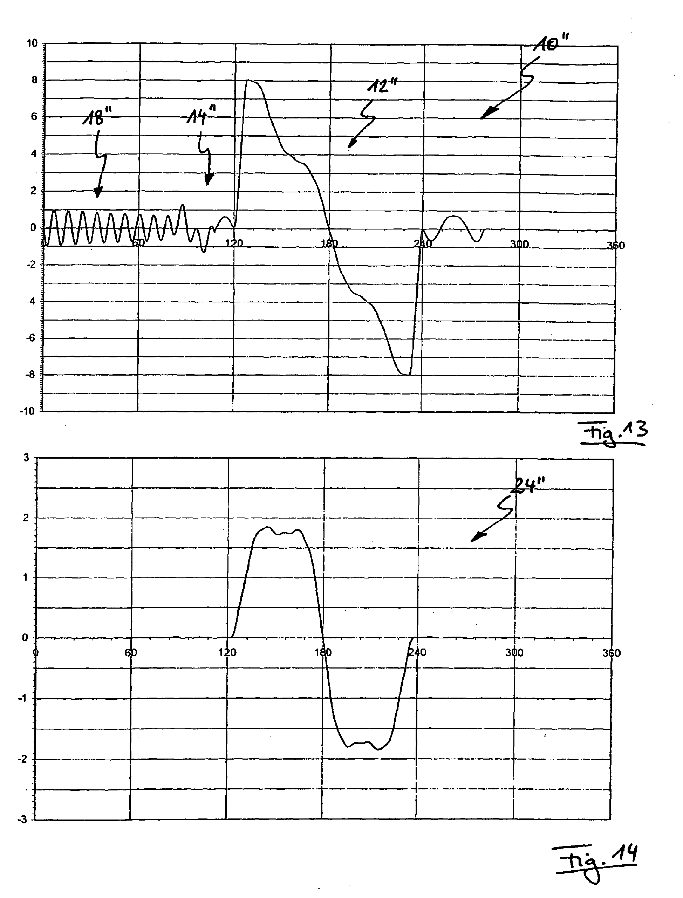

Die Fig. 13 und 14 zeigen das Beschleunigungsprofil 10" bzw. das Antriebsmomentprofil 24", das von einer simulierten parasitären Schwingung 18" überlagert wird, wie sie bei einem realen Betrieb eines Rundschalttischs auftreten kann. Fig. 13 ist deutlich zu entnehmen, dass bereits die Eingangsoszillation 14" zu einer signifikanten Dämpfung der parasitären Schwingung 18" führt, sodass deren Einfluss auf die Hauptbeschleunigung 12" nur noch vergleichsweise gering ist.

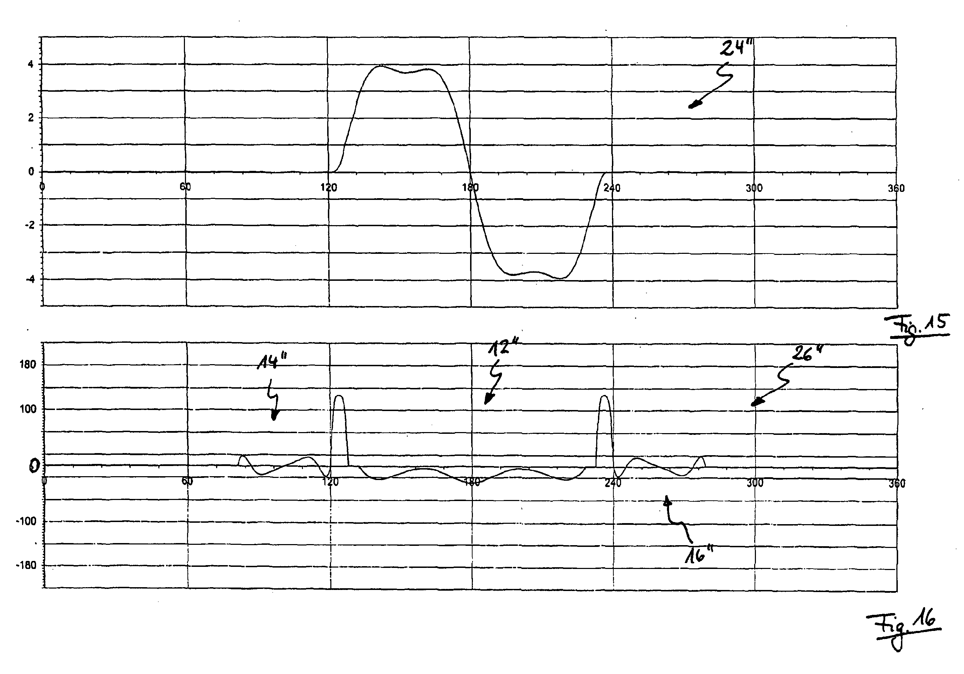

Fig. 15 zeigt das Antriebsmomentprofil 24" der Fig. 12 in einer "gestreckten" Version. Es ist einem in Fig. 16 gezeigten Profil 26" des Ruckkennwerts - also einem Profil der ersten Ableitung des Beschleunigungsprofils 10" - gegenüber gestellt.

Fig. 16 ist zu entnehmen, dass bei den Übergängen zwischen der Eingangsoszillation 14" und der Hauptbeschleunigung 12" bzw. zwischen der Hauptbeschleunigung, 12" und der Ausgangsoszillation 16" bei den Drehwinkeln 120° bzw. 240° ein Nulldurchgang des Ruckkennwerts vorliegt. Dadurch verlaufen die genannten Übergänge vergleichsweise sanft. Im Gegensatz dazu zeigt das sich aus dem Beschleunigungsprofil 10 ergebende Ruckkennwertprofil 26 (vgl. Fig. 6) bei diesen Übergängen globale Maxima. Eine weitere Differenzierung des Ruckkennwertprofils 26" - d.h. die zweite Ableitung des Beschleunigungsprofils 10" - führt zu einem Kurvenverlauf, der in den genannten Übergängen immer noch stetig ist.

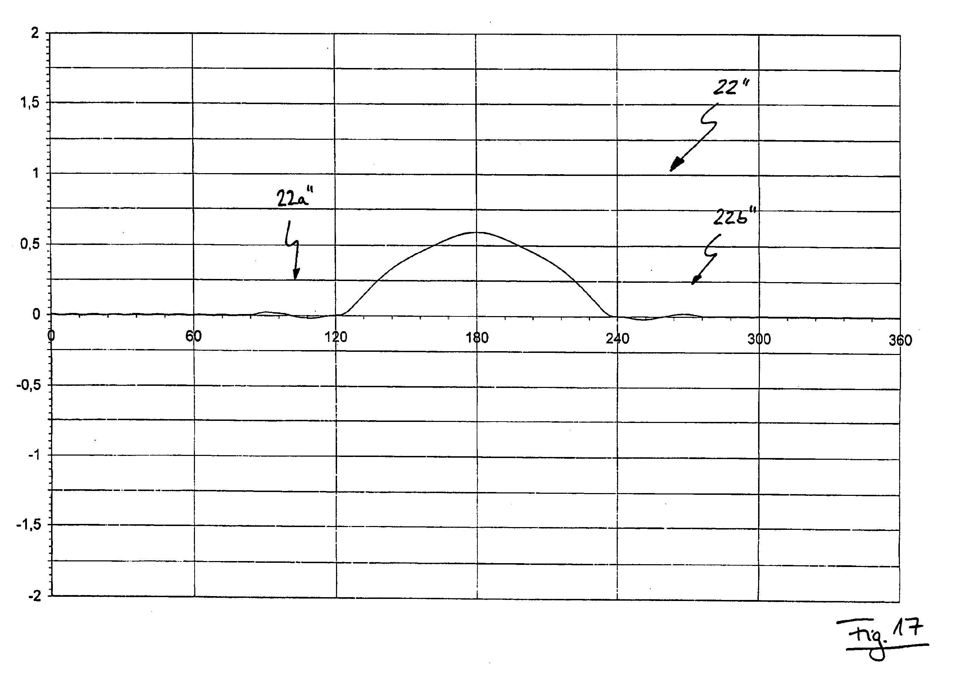

Fig. 17 zeigt ein durch das Beschleunigungsprofil 10" erzeugtes Geschwindigkeitsprofil 22". Die Geschwindigkeitsoszillationen 22a", 22b", die durch die Oszillationen 14" bzw. 16" hervorgerufen werden, sind - wie die entsprechenden Oszillationen 22a, 22b, 22a', 22b' der Geschwindigkeitsprofile 22 bzw. 22' - nur gering.

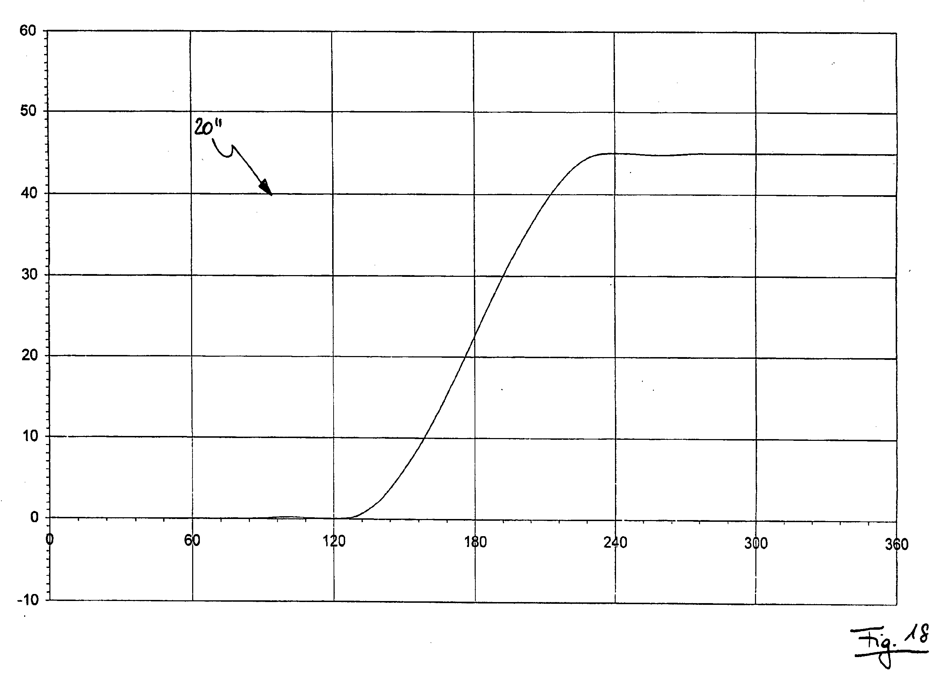

Fig. 18 zeigt ein Bewegungsprofil 20", das sich aus dem Beschleunigungsprofil 10" ergibt. Es ist zu erkennen, dass auch das Beschleunigungsprofil 10" nur sehr kleine Bewegungsamplituden erzeugt, die durch die Oszillationen 14", 16" hervorgerufen werden.

Aus den vorstehenden Ausführungen wird deutlich, dass die Oszillationen 14, 14'; 14", 16, 16', 16" zwar einen ausgeprägten dämpfenden Effekt aufweisen, durch den die parasitären Schwingungen 18, 18', 18" zu einem großen Teil unterdrückt werden können. Allerdings ist die Auswirkung der Oszillationen 14, 14', 14", 16, 16', 16" auf eine tatsächliche Bewegung des Werkstücks minimal, sodass sich die Oszillation 14, 14', 16', 16, 16', 16" in sehr vielen Fällen problemlos in bekannte Beschleunigungsprofile integrieren lassen. Die Dauer der Oszillationen sowie deren Verlauf bzw. die Anzahl und Ausprägung der Maxima und Minima kann beliebig gewählt werden, um die für den jeweils vorliegenden Anwendungsfall optimale Dämpfung bei gleichzeitig möglichst geringer Beeinflussung der Haupt-phase/Hauptbeschleunigung zu erreichen. Die vorgeschaltete Oszillation und die nachgeschaltete Oszillation sind zwar bevorzugt symmetrisch, allerdings kann es in bestimmten Fällen vorteilhaft sein, wenn die Oszillationen in ihrem Verlauf, ihrer Dauer und/oder ihrer Amplitude unterschiedlich sind.

### Bezugszeichenliste

- 10, 10', 10": Beschleunigungsprofil
- 12, 12', 12": Hauptbeschleunigung
- 12a', 12b', 12a": Maximum
- 12c', 12c": Minimum
- 12d": Wendepunkt
- 14, 14', 14": Eingangsoszillation
- 14a, 14b: Minimum
- 14c: Maximum
- 16, 16', 16": Ausgangsoszillation
- 16a, 16b: Maximum
- 16c: Minimum
- 18, 18', 18": parasitäre Schwingung
- 20, 20', 20": Bewegungsprofil
- 22, 22', 22": Geschwindigkeitsprofil
- 22a, 22b, 22a', 22b', 22a", 22b": Geschwindigkeitsoszillation
- 24, 24": Antriebsmomentprofil
- 26, 26": Ableitung (Ruckkennwert)
- A: Abszisse
- O: Ordinate
- AA: Antriebsabschnitt
- R: Rastgang

## Patentansprüche

1. Verfahren zur schwingungsgedämpften rotatorischen und/oder linearen Bewegung eines Werkstücks von einer ersten Ruheposition in eine zweiten Ruheposition,
das zumindest eine Eingangsphase und eine Hauptphase umfasst, wobei das Werkstück während der Eingangsphase beschleunigt
wird, wobei die Beschleunigung durch eine erste Funktion (14, 14', 14") definiert ist, die zumindest drei Extrema (14a, 14b, 14c) umfasst, um eine Oszillation des Werkstücks um die erste Ruheposition zu erzeugen, und
wobei sich die die Bewegung des Werkstücks von der ersten Ruheposition in die zweite Ruheposition umfassende Hauptphase an die Eingangsphase anschließt und die Bewegung des Werkstück während der Hauptphase durch eine Beschleunigung gemäß einer zweite Funktion (12, 12', 12") definiert ist.

2. Verfahren nach Anspruch 1,
**dadurch gekennzeichnet, dass**
ferner eine Ausgangsphase vorgesehen ist, die sich an die Hauptphase anschließt, wobei das Werkstück während der Ausgangsphase erneut beschleunigt wird, wobei die Beschleunigung durch eine dritte Funktion (16, 16', 16") definiert ist, die zumindest drei Extrema (16a, 16b, 16c) umfasst, um eine Oszillation des Werkstücks um die zweite Ruheposition zu erzeugen.

3. Verfahren nach Anspruch 2,
**dadurch gekennzeichnet, dass**
die erste und die dritte Funktion (14, 14', 14" bzw. 16, 16', 16") invers zueinander sind oder einen an einer gemeinsamen Abszisse (A) gespiegelten Verlauf aufweisen.

4. Verfahren nach Anspruch 1, 2 oder 3,
**dadurch gekennzeichnet, dass**
die erste Funktion (14, 14') und/oder die dritte Funktion (16, 16') zumindest ein Segment mit einem konstanten Verlauf aufweisen.

5. Verfahren nach Anspruch 4,
**dadurch gekennzeichnet, dass**
das Segment mit konstantem Verlauf das mittlere Extremum (14c, 16c) der zumindest drei Extrema bildet.

6. Verfahren nach zumindest einem der vorstehenden Ansprüche, **dadurch gekennzeichnet, dass**
die maximale Amplitude der durch die Oszillation während der Eingangsphase und/oder während der Ausgangsphase erzeugten Bewegung des Werkstücks weniger als 0,1 mm auf 100 mm Gesamtweg, bevorzugt weniger als 0,02 mm auf 100 mm Gesamtweg der während der Hauptphase erzeugten Bewegung beträgt.

7. Verfahren nach zumindest einem der vorstehenden Ansprüche, **dadurch gekennzeichnet, dass**
die Ableitung (26, 26") der ersten Funktion (14, 14', 14") und/oder die Ableitung (26, 26") der dritten Funktion (16, 16', 16") jeweils vier Extrema aufweisen.

8. Verfahren nach zumindest einem der vorstehenden Ansprüche, **dadurch gekennzeichnet, dass**
ein Übergang von der ersten Funktion (14, 14', 14") zu der zweiten Funktion (12, 12', 12") und/oder ein Übergang von der zweiten Funktion (12, 12', 12") zu der dritten Funktion (16, 16', 16") stetig sind.

9. Verfahren nach zumindest einem der vorstehenden Ansprüche, **dadurch gekennzeichnet, dass**
die erste und die zweite Funktion (14, 14', 14" bzw. 12, 12', 12") an einem Übergang von der Eingangsphase in die Hauptphase und/oder die zweite und die dritte Funktion (12, 12', 12" bzw. 16, 16', 16") an einem Übergang von der Hauptphase in die Ausgangsphase jeweils einen Funktionswert von 0 aufweisen.

10. Verfahren nach zumindest einem der vorstehenden Ansprüche, **dadurch gekennzeichnet, dass**
die erste Ableitung (26") der ersten Funktion (14") und die erste Ableitung (26") der zweiten Funktion (12") an einem Übergang von der Eingangsphase in die Hauptphase und/oder die erste Ableitung (26") der zweiten Funktion (12") und die erste Ableitung (26") der dritte Funktion (16") an einem Übergang von der Hauptphase in die Übergangsphase jeweils einen Wert von 0 aufweisen.

11. Transportvorrichtung mit einem für eine Aufnahme eines Werkstücks geeigneten Transportelement, das rotatorisch und/oder linear von einer ersten Ruheposition in eine zweite Ruheposition bewegbar ist, wobei die Transportvorrichtung eine programmierbare Steuervorrichtung umfasst, die dazu ausgebildet ist, die Bewegung des Transportelements gemäß einem Verfahren nach zumindest einem der vorstehenden Ansprüche zu steuern.

12. Transportvorrichtung mit einem für eine Aufnahme eines Werkstücks geeigneten Transportelement, das rotatorisch und/oder linear von einer ersten Ruheposition in eine zweite Ruheposition bewegbar ist, wobei die Transportvorrichtung eine mechanische Zwangssteuerung umfasst, die derart ausgebildet ist, dass das Transportelement gemäß einem Verfahren nach zumindest einem der vorstehenden Ansprüche bewegt ist.

13. Transportvorrichtung nach Anspruch 12,
**dadurch gekennzeichnet, dass**
das Transportelement ein Drehteller ist, der in eine Antriebsnut einer Kurventrommel eingreifende Mitnehmer aufweist, um durch eine Drehbewegung der Kurventrommel eine zwangsgesteuerte Drehbewegung des Drehtellers zu erzeugen.

## Claims

1. A method for the vibration-damped rotary and/or linear movement of a workpiece from a first position of rest into a second position of rest,
said method comprising at least an entry phase and a main phase, wherein the workpiece is accelerated during the entry phase, with the acceleration being defined by a first function (14, 14', 14") which comprises at least three extremes (14a, 14b, 14c) to generate an oscillation of the workpiece about the first position of rest; and wherein the main phase comprising the movement of the workpiece from the first position of rest into the second position of rest follows on from the entry phase and the movement of the workpiece during the main phase is defined by an acceleration in accordance with a second function (12, 12', 12").

2. A method in accordance with claim 1,
**characterised in that**
an exit phase is furthermore provided which follows on from the main phase, with the workpiece again being accelerated during the exit phase and with the acceleration being defined by a third function (16, 16', 16") which comprises at least three extremes (16a, 16b, 16c) to generate an oscillation of the workpiece about the second position of rest.

3. A method in accordance with claim 2,
**characterised in that**
the first and third functions (14, 14', 14" and 16, 16', 16" respectively) are inverse with respect to one another or have a path mirrored at a common abscissa (A).

4. A method in accordance with claim 1, claim 2 or claim 3, **characterised in that**
the first function (14, 14') and/or the third function (16, 16') has/have at least one segment having a constant path.

5. A method in accordance with claim 4,
**characterised in that**
the segment having a constant path forms the middle extreme (14c, 16c) of the at least three extremes.

6. A method in accordance with at least one of the preceding claims, **characterised in that**
the maximum amplitude of the movement of the workpiece generated by the oscillation during the entry phase and/or during the exit phase amounts to less than 0.1 mm over 100 mm total distance, preferably less than 0.02 mm over 100 mm total distance, of the movement generated during the main phase.

7. A method in accordance with at least one of the preceding claims, **characterised in that**
the derivation (26, 26") of the first function (14, 14'. 14") and/or the derivation (26, 26") of the third function (16, 16', 16") each has/have four extremes.

8. A method in accordance with at least one of the preceding claims, **characterised in that**
a transition from the first function (14, 14', 14") to the second function (12, 12', 12") and/or a transition from the second function (12, 12', 12") to the third function (16, 16', 16") is/are constant.

9. A method in accordance with at least one of the preceding claims, **characterised in that**
the first and second functions (14, 14', 14" and 12, 12', 12" respectively) each have a functional value of 0 at a transition from the entry phase into the main phase and/or the second and third functions (12, 12', 12" and 16, 16', 16" respectively) each have a functional value of 0 at a transition from the main phase into the exit phase.

10. A method in accordance with at least one of the preceding claims, **characterised in that**
the first derivation (26") of the first function (14") and the first derivation (26") of the second function (12") each have a value of 0 at a transition from the entry phase into the main phase and/or the first derivation (26") of the second function (12") and the first derivation (26") of the third function (16") each have a value of 0 at a transition from the main phase into the transition phase.

11. A transport apparatus having a transport element which is suitable for a reception of a workpiece and which is movable in a rotary and/or linear manner from a first position of rest into a second position of rest, wherein the transport apparatus comprises a programmable control apparatus which is configured to control the movement of the transport element in accordance with a method in accordance with at least one of the preceding claims.

12. A transport apparatus having a transport element which is suitable for a reception of a workpiece and which is movable in a rotary and/ or linear manner from a first position of rest into a second position of rest, wherein the transport apparatus comprises a mechanical compulsory control which is configured such that the transport element is moved in accordance with a method in accordance with at least one of the preceding claims.

13. A transport apparatus in accordance with claim 12,
**characterised in that**
the transport element is a turntable which has a driver which engages into a drive groove of a barrel cam to generate a compulsorily controlled rotary movement of the turntable by a rotary movement of the barrel cam.

## Revendications

1. Procédé pour assurer un mouvement rotatif et/ou linéaire d'une pièce à oeuvrer avec amortissement des oscillations depuis une première position de repos jusque dans une seconde position de repos, qui inclut au moins une phase d'entrée et une phase principale,
dans lequel la pièce à oeuvrer est accélérée pendant la phase d'entrée, ladite accélération étant définie par une première fonction (14, 14', 14") qui comprend au moins trois extrêmes (14a, 14b, 14c) afin d'engendrer une oscillation de la pièce à oeuvrer autour de la première position de repos, et
dans lequel la phase principale qui inclut le mouvement de la pièce à oeuvrer depuis la première position de repos jusque dans la seconde position de repos fait suite à la phase d'entrée et le mouvement de la pièce à oeuvrer pendant la phase principale est défini par une accélération selon une seconde fonction (12, 12', 12").

2. Procédé selon la revendication 1,
**caractérisé en ce qu'**il est en outre prévu une phase de sortie, qui fait suite à la phase principale, dans lequel la pièce à oeuvrer est à nouveau accélérée pendant la phase de sortie, l'accélération étant définie par une troisième fonction (16, 16', 16") qui comprend au moins trois extrêmes (16a, 16b, 16c) afin d'engendrer une oscillation de la pièce à oeuvrer autour de la seconde position de repos.

3. Procédé selon la revendication 2,
**caractérisé en ce que** la première et la troisième fonction (14, 14', 14" ou respectivement 16, 16', 16") sont inverses l'une de l'autre, ou présentent une évolution symétrique par rapport à une abscisse commune (A).

4. Procédé selon la revendication 1, 2 ou 3,
**caractérisé en ce que** la première fonction (14, 14') et/ou la troisième fonction (16, 16') comprend au moins un segment avec une évolution constante.

5. Procédé selon la revendication 4,
**caractérisé en ce que** le segment avec évolution constante forme l'extrême du milieu (14c, 16c) desdits au moins trois extrêmes.

6. Procédé selon l'une au moins des revendications précédentes, **caractérisé en ce que** l'amplitude maximale du mouvement de la pièce à oeuvrer engendré par l'oscillation pendant la phase d'entrée et/ou pendant la phase de sortie est inférieure à 0,1 mm pour une course totale de 100 mm, de préférence inférieure à 0,02 mm pour une course totale de 100 mm du mouvement engendré pendant la phase principale.

7. Procédé selon l'une au moins des revendications précédentes, **caractérisé en ce que** la dérivée (26, 26") de la première fonction (14, 14', 14") et/ou la dérivée (26, 26") de la troisième fonction (16, 16', 16") comportent chacune quatre extrêmes.

8. Procédé selon l'une au moins des revendications précédentes, **caractérisé en ce qu'**une transition de la première fonction (14, 14', 14") à la seconde fonction (12, 12', 12") et/ou une transition de la seconde fonction (12, 12', 12") à la troisième fonction (16, 16', 16") sont continues.

9. Procédé selon l'une au moins des revendications précédentes, **caractérisé en ce que** la première et la seconde fonction (14, 14', 14" ou respectivement 12, 12', 12") présentent chacune une valeur égale à 0 à une transition de la phase d'entrée vers la phase principale et/ou **en ce que** la seconde et la troisième fonction (12, 12', 12" ou respectivement 16, 16', 16") présentent chacune une valeur égale à 0 à une transition de la phase principale vers la phase de sortie.

10. Procédé selon l'une au moins des revendications précédentes, **caractérisé en ce que** la première dérivée (26") de la première fonction (14") et la première dérivée (26") de la seconde fonction (12") présentent respectivement une valeur égale à 0 à une transition de la phase d'entrée vers la phase principale et/ou **en ce que** la première dérivée (26") de la seconde fonction (12") et la première dérivée (26") de la troisième fonction (16") présentent respectivement une valeur égale à 0 à une transition de la phase principale vers la phase de transition.

11. Dispositif de transport comprenant un élément de transport convenable pour la réception d'une pièce à oeuvrer, élément qui est déplaçable en rotation et/ou de façon linéaire depuis une première position de repos jusque dans une seconde position de repos, dans lequel le dispositif de transport comprend un dispositif de commande programmable qui est réalisé pour commander le déplacement de l'élément de transport selon un procédé de l'une au moins des revendications précédentes.

12. Dispositif de transport comprenant un élément de transport convenable pour la réception d'une pièce à oeuvrer, élément qui est déplaçable en rotation et/ou de façon linéaire depuis une première position de repos jusque dans une seconde position de repos, dans lequel le dispositif de transport comprend une commande à force mécanique, qui est réalisée de telle manière que l'élément de transport est déplacé selon un procédé de l'une au moins des revendications précédentes.

13. Dispositif de transport selon la revendication 12,
**caractérisé en ce que** l'élément de transport est un plateau tournant qui comporte un élément d'entraînement s'engageant dans une gorge d'entraînement d'un tambour à cames, afin d'engendrer un mouvement rotatif à commande forcée du plateau tournant par un mouvement de rotation du tambour à cames.
